# EUROPÄISCHE PATENTSCHRIFT

(11) **EP 1 852 201 B1**
(45) Veröffentlichungstag und Bekanntmachung des Hinweises auf die Patenterteilung: **26.08.2009**
(21) Anmeldenummer: 07007788.8
(22) Anmeldetag: 17.04.2007
(51) Int. Cl.: B23B 45/00, B25D 16/00, B23Q 3/12

(54) **Bohrwerkzeuggerät, insbesondere Bohrhammer**
Drilling device, in particular a hammer drill
Outil de perçage, en particulier perceuse

(30) Priorität: 05.05.2006 DE 102006020925
(43) Veröffentlichungstag der Anmeldung: 07.11.2007
(73) Patentinhaber: Metabowerke GmbH & Co., 72622 Nürtingen (DE)
(72) Erfinder: Ott, Ralf, 88499 Riedlingen (DE)
(74) Vertreter: Friz, Oliver

(56) Entgegenhaltungen:
- EP-A- 0 684 109
- DE-A1- 4 343 638
- DE-A1- 19 717 465
- DE-A1-102006 015 274
- US-A- 1 871 720

## Beschreibung

Die vorliegende Erfindung betrifft ein Bohrwerkzeuggerät, insbesondere Bohrhammer, mit einem Gehäusekörper und einer hiervon vorstehenden Antriebsspindel und einem an der Antriebsspindel montierbaren und abnehmbaren Werkzeugfutter mit einem manuell bedienbaren Verriegelungs- und Freigabemechanismus, um das Werkzeugfutter axial formschlüssig an der Antriebsspindel zu montieren bzw. freizugeben, und mit einer Kupplungseinrichtung zur Herbeiführung einer Drehkopplung zwischen der Antriebsspindel und einer Komponente des Werkzeugfutters, wobei die Kupplungseinrichtung zur Begrenzung eines ruckartig auftretenden Rückdrehmoments als Überlastkupplung ausgebildet ist.

Ein derartiges Bohrwerkzeuggerät ist in der nicht vorveröffentlichten deutschen Patentanmeldung 10 2006 015 274 der Anmelderin beschrieben.

Ein nicht gattungsgemäßes Bohrwerkzeuggerät ist aus DE 197 17 465 B4 vorbekannt, bei dem sämtliche Komponenten der Kupplungseinrichtung innerhalb des Gehäusekörpers des Bohrwerkzeuggeräts aufgenommen und damit schwer zugänglich sind.

Der vorliegenden Erfindung liegt die Aufgabe zugrunde, die Kupplungseinrichtung gut zugänglich, jedoch gleichwohl einfach und betriebssicher, auszubilden.

Die Aufgabe wird durch ein Bohrwerkzeuggerät mit den Merkmalen des Anspruchs 1 gelöst.

Durch die Verwendung von Rastenscheiben zur Bildung der Kupplungseinrichtung können Kräfte im Wesentlichen flächenhaft übertragen werden. Dieser Ausführungsform zur Drehmomentübertragung ist beispielsweise der Vorzug zu geben vor einer Drehmomentübertragung mittels ein- und ausrückbarer Rastkörper, bei denen meist nur eine punktuelle oder lineare Kraftübertragung stattfindet, die zu hoher Abnutzung und Störungsanfälligkeit führen kann. Außerdem sind derartige Konstruktionen naturgemäß schwerer zugänglich. Es hat sich auch in der Praxis als nicht unbedingt vorteilhaft erwiesen, einzelne oder alle Komponenten der Kupplungseinrichtung in das Werkzeugfutter zu integrieren, da solchenfalls Komponenten, die zur Drehkopplung zusammenwirken, ständig voneinander getrennt bzw. wieder miteinander verbunden werden, was die Komponenten insgesamt störungsanfälliger macht. Nach der vorliegenden Erfindung werden die kraftübertragenden Rastenscheiben dauerhaft an der Antriebsspindel angeordnet.

Sie sind somit bei abgenommenem Werkzeugfutter gut zugänglich. Die auf diese Weise aus nur wenigen Komponenten geschaffene Kupplungseinrichtung ist auf besonders wirtschaftliche Weise herstellbar und zeichnet sich überdies aufgrund ihrer Einfachheit durch eine sehr hohe Betriebssicherheit aus. Wie bereits erwähnt, ist sie extremst verschleißunempfindlich.

Nach einer Ausführungsform des erfindungsgemäßen Bohrwerkzeuggeräts steht die zweite Rastenscheibe bei formschlüssig montiertem Werkzeugfutter in Drehmitnahme mit einem Werkzeughalter des Werkzeugfutters, also mit derjenigen Komponente des Werkzeugfutters, die unmittelbar den Bohrer, Bohrmeißel oder Meißel aufnimmt und hält. Obschon grundsätzlich im Zuge der Drehkopplung innerhalb des Werkzeugfutters mehrere Komponenten vorgesehen werden könnten, die eine Drehmomentübertragung bewirken, erweist es sich im Hinblick auf Verschleiß und eine unmittelbare Kraftübertragung als vorteilhaft, wenn die zweite Rastenscheibe direkt mit dem Werkzeughalter zusammenwirkt. Die axiale Verschieblichkeit zwischen zweiter Rastenscheibe und der betreffenden Komponente des Werkzeugfutters zum Abziehen bzw. Aufstecken des Werkzeugfutters kann in vorteilhafter Weise mittels einer Umfangsverzahnung oder mittels eines sonstigen in radialer Richtung vorstehenden Drehkopplungsmittels erfolgen, welches dann vorzugsweise unmittelbar mit einer Abtriebskomponente des Werkzeugfutters zusammenwirkt.

Zur Herbeiführung der Vorspannung der miteinander zusammenwirkenden Rastenscheiben hat es sich als vorteilhaft erwiesen, wenn hierfür eine Druckfeder verwendet wird, die gegen eine vordere Stirnseite der zweiten Rastenscheibe anliegt. Die Druckfeder ist vorteilhafterweise einenends an der Antriebsspindel festgelegt und gegenüber der Antriebsspindel axial abgestützt, beispielsweise an einem Ringbund der Antriebswelle, oder es könnte hierfür ein nach radial innen vorgespannter Sprengring oder ein anderes geeignetes Mittel verwendet werden. Insbesondere hat sich die Ausbildung der Druckfeder als Tellerfederpaket als vorteilhaft erwiesen, da solchenfalls eine axiale Vorspannung gleichmäßig in die zweite Rastenscheibe eingeleitet werden kann.

Vorteilhafterweise ist die Anordnung der Rastenscheiben derart, dass die erste Rastenscheibe dem Gehäusekörper zugewandt und die zweite Rastenscheibe vom Gehäusekörper abgewandt angeordnet ist.

Die drehfeste Anordnung der ersten Rastenscheibe mit der Antriebsspindel kann in an sich beliebiger Weise herbeigeführt werden. Es erweist sich herstellungstechnisch als vorteilhaft, wenn die erste Rastenscheibe auf die Werkzeugspindel aufgepresst ist, wobei aber auch eine andere zweckmäßige Fixierung denkbar wäre. Es erweist sich hier insbesondere als vorteilhaft, wenn die Kupplungseinrichtung an einer axialen Abstufung der Antriebsspindel angeordnet ist. Solchenfalls lässt sich auch eine definierte Montagestellung zum Anbringen der ersten Rastenscheibe ohne weiteres realisieren.

Das erfindungsgemäße Bohrwerkzeuggerät erweist sich auch als vorteilhaft, da die Kupplungseinrichtung außerhalb des Gehäusekörpers an gut zugänglicher Stelle an der Antriebsspindel angeordnet ist. Dies ermöglicht eine leichte Montierbarkeit der Kupplungseinrichtung, und in einem etwaigen Schadens- oder Reparaturfall können Komponenten der Kupplungseinrichtung ausgetauscht werden, ohne dass Gehäusekomponenten des Bohrwerkzeuggeräts aufwendig demontiert werden müssten.

Insofern erweist es sich als besonders vorteilhaft, wenn die Kupplungseinrichtung zwar axial außerhalb des Gehäusekörpers angeordnet ist, jedoch radial außen von einer hülsenförmigen Komponente des Werkzeugfutters umgeben ist. Auf diese Weise ist sie im Betrieb des Bohrwerkzeuggeräts geschützt angeordnet. Beispielsweise kann die hülsenförmige Komponente des Werkzeugfutters direkt von dem Werkzeughalter gebildet sein, wobei aber auch insbesondere zusätzlich weitere Komponenten des Werkzeugfutters sich radial außen erstrecken können, beispielsweise eine manuell bedienbare Entriegelungshülse für den Verriegelungs- und Freigabemechanismus des Werkzeugfutters.

Der von der Drehkupplungseinrichtung vorzugsweise unabhängige manuell bedienbare Verriegelungs- und Freigabemechanismus für das Werkzeugfutter kann nach einer Ausführungsform des Bohrwerkzeuggeräts Eingriffskörper umfassen, die von radial außen in Ausnehmungen in der Antriebsspindel einrastbar bzw. ausrückbar sind.

Bei Ausbildung des Bohrwerkzeuggeräts als Bohrhammer kann die Antriebsspindel eine in Längsrichtung durchgehende Öffnung aufweisen, in der ein Schlagwerk zur axialen Impulsbeaufschlagung eines im Werkzeugfutter aufgenommenen Werkzeugs vorgesehen ist.

Das Schlagwerk kann solchenfalls einen Schläger und einen Döpper umfassen, welch letzterer direkt auf eine axiale Stirnseite des Werkzeugs einwirkt.

Zur Aufnahme des Werkzeugs kann das Werkzeugfutter so ausgebildet sein, dass der Werkzeughalter in dem Bereich, in dem er ein eingesetztes Werkzeug umgibt, radiale Öffnungen zum Fixieren des Werkzeugs aufweist, wobei durch diese radialen Öffnungen hindurch von radial außen Eingriffskörper in komplementäre Ausnehmungen des Werkzeugs einragen. Die erwähnten Öffnungen können nach einer Ausführungsform des Bohrwerkzeuggeräts schlitzförmig sein. Auf diese Weise lässt sich eine axiale Bewegbarkeit eines Hammerwerkzeugs erreichen.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Bohrwerkzeuggeräts. In der Zeichnung zeigt:
- Figur 1: eine teilweise Längsschnittansicht eines erfindungsgemäßen Bohrwerkzeuggeräts;
- Figur 2: eine Schnittansicht mit Schnittebene B-B in Figur 1 und
- Figur 3: eine Schnittansicht mit Schnittebene C-C in Figur 1.

Die Figuren zeigen ein insgesamt mit dem Bezugszeichen 2 bezeichnetes Bohrwerkzeuggerät in Form eines Bohrhammers, mit einem Gehäusekörper 4 und einer von dem Gehäusekörper 4 vorstehenden Antriebsspindel 6 und einem Werkzeugfutter 8, welches an der Antriebsspindel 6 montierbar und abnehmbar ist. Hierfür ist ein manuell und werkzeuglos bedienbarer Verriegelungs- und Freigabemechanismus 10 vorgesehen, der im beispielhaften Fall zwei als Kugeln ausgebildete Eingriffskörper 12 umfasst, die von diametral gegenüberliegenden Seiten in eine Umfangsnut 14 der Antriebsspindel 6 eingreifen, um das Werkzeugfutter 8 formschlüssig an der Antriebsspindel 6 zu halten. Zum axialen Lösen des Werkzeugfutters 8 von der Antriebsspindel 6 ist ein in Verriegelungsrichtung federvorgespannter Stellring 16 mit einem scheibenförmigen Stellkörper 18 vorgesehen, der bei Verdrehen entgegen der Federvorspannung den Eingriffskörpern 12 einen radial äußeren Aufnahmeraum in dem scheibenförmigen Stellkörper bietet, in welchen die Eingriffskörper 12 dann beim axialen Abziehen des Werkzeugfutters 8 von der Antriebsspindel 6 verdrängbar sind, so dass die axiale formschlüssige Kopplung zwischen Eingriffskörpern 12 und Umfangsnut 14 der Antriebsspindel 6 gelöst wird.

Das Werkzeugfutter 8 umfasst einen hülsenförmigen Werkzeughalter 20, in den ein nicht dargestelltes Werkzeug, beispielsweise mit SDS-Einsteckende, einsteckbar ist. Der Werkzeughalter 20 erstreckt sich konzentrisch zur Längsachse 22 des Bohrwerkzeuggeräts und mehrfach abgestuft in Richtung auf den Gehäusekörper 4 und umgibt einen vorderen aus dem Gehäusekörper 4 vorstehenden Abschnitt der Antriebsspindel 6 radial außen konzentrisch. Daher weist der Werkzeughalter 20 im Bereich des Verriegelungs- und Freigabemechanismus 10 radiale Durchgangsöffnungen 24 für die Eingriffskörper 12 auf. Für eine drehfeste Kopplung zwischen Werkzeugfutter 8 und Antriebsspindel 6 ist eine insgesamt mit dem Bezugszeichen 26 bezeichnete Kupplungseinrichtung vorgesehen. Die Kupplungseinrichtung 26 umfasst eine erste Rastenscheibe 28, die drehfest an einer axialen Abstufung 30 der Antriebsspindel 6, beispielsweise durch Aufpressen, fixiert ist. Weiter umfasst die Kupplungseinrichtung 26 eine zweite Rastenscheibe 32, die über eine Druckfeder 34 in Form eines Tellerfederpakets 36 gegen die erste Rastenscheibe 28 unter Vorspannung anliegt. Die Rastenscheiben 28, 32 sowie die Druckfeder 34 umgeben die Antriebsspindel 6 konzentrisch.

Die Druckfeder 34 ist einenends über ein Sicherungsmittel 38 axial gegen die Antriebsspindel 6 abgestützt. Die zweite Rastenscheibe 32 steht über radial äußere Drehkopplungsmittel 40, beispielsweise eine Außenverzahnung, in Drehmitnahme mit dem Werkzeughalter 20. Außerdem sind die zweite Rastenscheibe 32 und der Werkzeughalter 20 axial zueinander verschieblich, was das Abnehmen des Werkzeugfutters 8 gestattet. Dabei verbleibt die aus den beiden Rastenscheiben 28, 32 und der Druckfeder 34 gebildete Kupplungseinrichtung 26 an dem vom Gehäusekörper 4 vorstehenden Abschnitt der Antriebsspindel 6 und ist so ohne weiteres zugänglich.

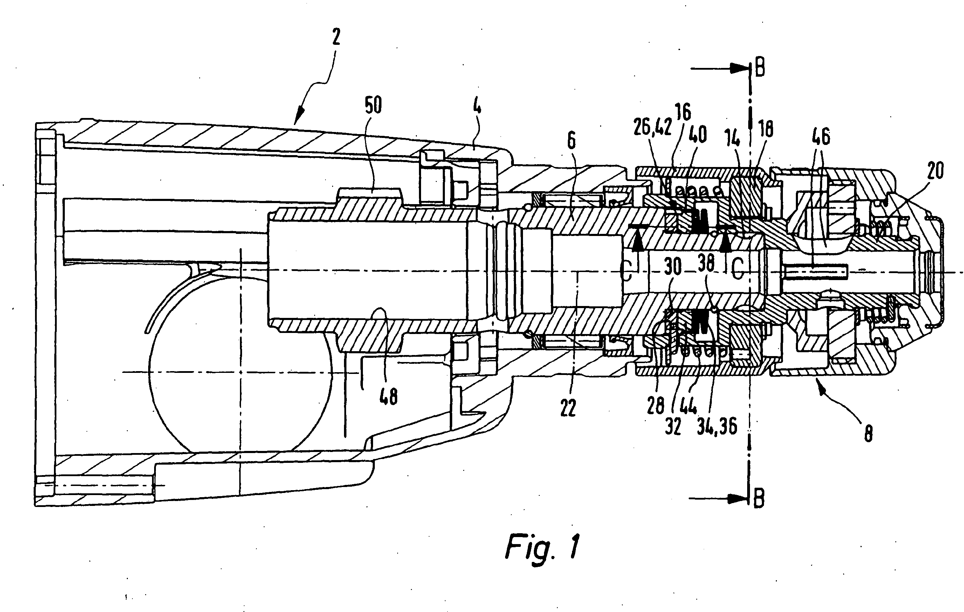

Durch die unter Vorspannung gegeneinander anliegenden Rastenscheiben 28, 32 ist eine Drehkopplung zwischen der Antriebsspindel 6 und dem Werkzeughalter 20 des Werkzeugfutters 8 erreicht. Zugleich ist hierdurch eine Überlastkupplung 42 verwirklicht. Bei Überschreiten eines vorgegebenen oder insbesondere vorgebbaren Drehmoments zwischen der ersten und der zweiten Rastenscheibe 28, 32 wird die zweite Rastenscheibe 32 in axialer Richtung in der Figur 1 nach rechts bewegt, d. h. die Überlastkupplung 42 bewirkt eine Entkopplung des Drehantriebs. Auf diese Weise kann verhindert werden, dass ein solches ruckartig auftretendes Rückdrehmoment auf den Benutzer übertragen wird und gegebenenfalls sogar zu Verletzungen führt. Solche Rückdrehmomente ergeben sich beispielsweise, wenn ein Bohrmeißel in einer Metallarmierung verhakt.

Wenn vorausgehend angedeutet wurde, dass das Drehmoment für die Überlastkupplung 42 verändert oder vorgegeben werden kann, so kann dies beispielsweise bei dem erfindungsgemäßen Bohrwerkzeuggerät auf besonders einfache Weise dadurch erfolgen, dass bei abgenommenem Werkzeugfutter die Kupplungseinrichtung 26 zunächst gut zugänglich ist.

Beispielsweise können unterschiedlich starke Federn eingesetzt werden, oder es kann das Auslösedrehmoment dadurch verändert werden, dass eine zusätzliche Ringscheibe bei der Feder verwendet wird, was das Auslösedrehmoment erhöht.

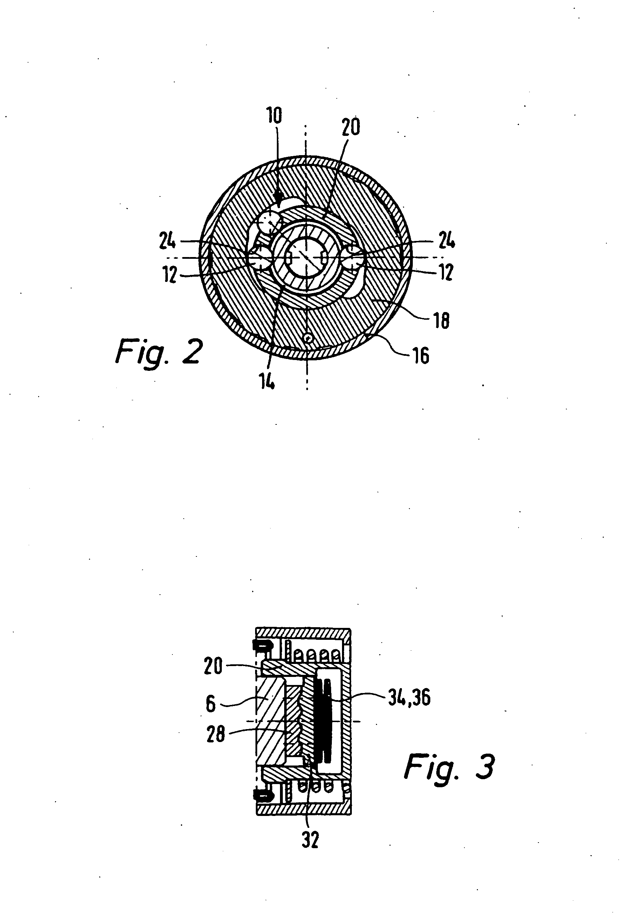

Man ersieht weiter aus Figuren 1 und 3, dass die Kupplungseinrichtung 26 radial außen von einem konzentrisch zur Längsrichtung 22 angeordneten Abschnitt des Werkzeughalters 20 umgeben und dadurch vor äußerer Einwirkung im Betrieb des Bohrwerkzeuggeräts, also bei aufgestecktem Werkzeugfutter 8, geschützt ist. Des Weiteren erkennt man, dass radial außerhalb dieses Abschnitts des Werkzeughalters 20 eine Feder 44 vorgesehen ist, die einenends mit dem Werkzeughalter 20 und anderenends mit dem scheibenförmigen Stellkörper 18 verbunden ist und so den scheibenförmigen Stellkörper 18 und den Stellring 16 in einer Drehrichtung vorspannt. Des Weiteren erkennt man radiale schlitzförmige Öffnungen 46 in dem Werkzeughalter 20, und zwar im Bereich eines Einsteckendes eines nicht dargestellten Werkzeugs. Zur Sicherung des nicht dargestellten Werkzeugs in dem Werkzeughalter 20 greifen nicht dargestellte Eingriffskörper durch diese Öffnungen 46 hindurch und sichern das Werkzeug.
Die Antriebsspindel 6 weist eine in Längsrichtung 22 durchgehende Längsöffnung 48 auf, in der ein nicht dargestelltes Schlagwerk angeordnet ist. Das Schlagwerk kann in vorteilhafter Weise einen Schläger und einen eine Stirnseite des Werkzeugs beaufschlagenden Döpper umfassen. Die Antriebsspindel 6 weist außerdem eine Umfangsverzahnung 50 in einem gehäuseseitigen Endabschnitt auf, mit dem sie mit einer nicht dargestellten Getriebekomponente, beispielsweise ein Ritzel, in kämmender Antriebsverbindung steht.

## Patentansprüche

1. Bohrwerkzeuggerät (2), insbesondere Bohrhammer, mit einem Gehäusekörper (4) und einer hiervon vorstehenden Antriebsspindel (6) und einem an der Antriebsspindel (6) montierbaren und abnehmbaren Werkzeugfutter (8) mit einem manuell bedienbaren Verriegelungs- und Freigabemechanismus (10), um das Werkzeugfutter (8) axial formschlüssig an der Antriebsspindel (6) zu montieren bzw. freizugeben, und mit einer Kupplungseinrichtung (26) zur Herbeiführung einer Drehkopplung zwischen der Antriebsspindel (6) und einer Komponente des Werkzeugfutters (8), wobei die Kupplungseinrichtung (26) zur Begrenzung eines ruckartig auftretenden Rückdrehmoments als Überlastkupplung (42) ausgebildet ist, **dadurch gekennzeichnet, dass** die Kupplungseinrichtung (26) eine erste und eine zweite Rastenscheibe (28 bzw. 32) umfasst, die beide auf der Antriebsspindel (6) angeordnet sind und bei abgenommenem Werkzeugfutter (8) bei der Antriebsspindel (6) verbleiben, dass die erste Rastenscheibe (28) drehfest mit der Antriebsspindel (6) verbunden ist und die zweite Rastenscheibe (32) drehbar und axial verschieblich auf der Antriebsspindel (6) angeordnet ist und ferner drehfest und axial verschieblich zum Werkzeugfutter (8) angeordnet ist und unter Federvorspannung gegen die erste Rastenscheibe (28) anliegt, so dass durch Ineinandergreifen der Rastenscheiben (28, 32) eine Drehkopplung zwischen der Antriebsspindel (6) und dem Werkzeugfutter (8) erreichbar ist, die bei Überlast lösbar ist.

2. Bohrwerkzeuggerät nach Anspruch 1, **dadurch gekennzeichnet, dass** die zweite Rastenscheibe (32) in Drehmitnahme mit einem Werkzeughalter (20) des Werkzeugfutters (8) steht.

3. Bohrwerkzeuggerät nach Anspruch 1 oder 2, **dadurch gekennzeichnet, dass** die zweite Rastenscheibe (32) mittels einer Umfangsverzahlung oder mittels in radialer Richtung vorstehenden Drehkopplungsmittel (40) in Drehmitnahme mit dem Werkzeugfutter (8) steht.

4. Bohrwerkzeuggerät nach Anspruch 1, 2 oder 3, **dadurch gekennzeichnet, dass** eine Druckfeder (34) gegen eine vordere Stirnseite der zweiten Rastenscheibe (32) anliegt.

5. Bohrwerkzeuggerät nach Anspruch 4, **dadurch gekennzeichnet, dass** die Druckfeder (34) einenends an der Antriebsspindel (6) festgelegt und axial abgestützt ist.

6. Bohrwerkzeuggerät nach Anspruch 4 oder 5, **dadurch gekennzeichnet, dass** die Druckfeder (34) ein Tellerfederpaket (36) umfasst.

7. Bohrwerkzeuggerät nach einem oder mehreren der vorstehenden Ansprüche, **dadurch gekennzeichnet, dass** die Kupplungseinrichtung (26) an einer.axialen Abstufung (30) der Antriebsspindel (6) angeordnet ist.

8. Bohrwerkzeuggerät nach einem oder mehreren der vorstehenden Ansprüche, **dadurch gekennzeichnet, dass** die Kupplungseinrichtung (26) außerhalb des Gehäusekörpers (4) angeordnet ist.

9. Bohrwerkzeuggerät nach Anspruch 8, **dadurch gekennzeichnet, dass** die Kupplungseinrichtung (26) radial außen von einer hülsenförmigen Komponente des Werkzeugfutters (8) umgeben ist.

10. Bohrwerkzeuggerät nach Anspruch 9, **dadurch gekennzeichnet, dass** die hülsenförmige Komponente des Werkzeugfutters (8) von dem Werkzeughalter (20) gebildet ist.

11. Bohrwerkzeuggerät nach einem oder mehreren der vorstehenden Ansprüche, **dadurch gekennzeichnet, dass** der manuell bedienbare Verriegelungs- und Freigabemechanismus (10), um das Werkzeugfutter (8) axial formschlüssig an der Antriebsspindel (6) zu montieren bzw. freizugeben, Eingriffskörper (12) umfasst, die von radial außen in eine Ausnehmung (14) in der Antriebsspindel (6) einrastbar bzw. ausrückbar sind.

12. Bohrwerkzeuggerät nach einem oder mehreren der vorstehenden Ansprüche, **dadurch gekennzeichnet, dass** die Antriebsspindel (6) eine in Längsrichtung (22) durchgehende Öffnung (48) aufweist, in der ein Schlagwerk zur axialen Impulsbeaufschlagung eines im Werkzeugfutter aufgenommenen Werkzeugs vorgesehen ist.

13. Bohrwerkzeuggerät nach Anspruch 12, **dadurch gekennzeichnet, dass** das Schlagwerk einen Schläger und einen Döpper umfasst, welch letzterer direkt auf eine axiale Stirnseite des Werkzeugs einwirkt.

14. Bohrwerkzeuggerät nach einem oder mehreren der vorstehenden Ansprüche, **dadurch gekennzeichnet, dass** der Werkzeughalter (20) in dem Bereich, in dem er ein eingesetztes Werkzeug umgibt, radiale Öffnungen (46) zum Fixieren des Werkzeugs aufweist, wobei durch diese radialen Öffnungen (46) hindurch von radial außen Eingriffskörper in komplementäre Ausnehmungen des Werkzeugs einragen.

15. Bohrwerkzeuggerät nach Anspruch 14, **dadurch gekennzeichnet, dass** die radialen Öffnungen (46) schlitzförmig sind.

## Claims

1. Boring tool device (2), in particular a hammer drill, with a housing body (4) and a drive spindle (6) protruding from the housing and a removable clamping chuck (8), which can be mounted on the drive spindle (6), with a manually-operable locking and releasing mechanism (10), in order to mount and release the clamping chuck (8) on the drive spindle (6) with a positive locking action, and with a coupling device (26) to bring about a rotational coupling between the drive spindle (6) and a component of the clamping chuck (8), whereby the coupling device (26) is constructed as an overload coupling (42) to restrict an occurring jerking and jolting opposing torque, **characterised in that** the coupling device (26) comprises a first and a second notched disk (28 and 32), which are both arranged on the drive spindle (6) and which with the clamping chuck (8) released remain with the drive spindle (6), such that the first notched disk (28) is connected with and rotates with the drive spindle (6) and the second notched disk (32) is arranged to be axially and rotationally displaceable on the drive spindle (6) and is further arranged to be fixed to rotate with and to be axially displaceable with respect to the clamping chuck (8) and lying under spring preloading against the first notched disk (28), so that on the intermeshing of the notched disks (28, 32) a rotational coupling is achieved between the drive spindle (6) and the clamping chuck (8), which can be disengaged in the event of overload.

2. Boring tool device according to claim 1, **characterised in that** the second notched disk (32) rotates with a tool holder (20) of the clamping chuck (8).

3. Boring tool device according to claim 1 or 2, **characterised in that** the second notched disk (32) rotates with the clamping chuck (8) by means of circumferential teething or by means of a rotational coupling device (40) protruding in the radial direction.

4. Boring tool device according to claim 1, 2 or 3, **characterised in that** a compression spring (34) fits closely against a front face of the second notched disk (32).

5. Boring tool device according to claim 4, **characterised in that** the compression spring (34) is fixed at one end on the drive spindle (6) and is axially supported.

6. Boring tool device according to claim 4 or 5, **characterised in that** the compression spring (34) comprises a packet of disk springs (36).

7. Boring tool device according to one or more of the foregoing claims, **characterised in that** the coupling device (26) is arranged on an axial graduation (30) of the drive spindle (6).

8. Boring tool device according to one or more of the foregoing claims, **characterised in that** the coupling device (26) is arranged outside the housing body (4).

9. Boring tool device according to claim 8, **characterised in that** the coupling device (26) is externally surrounded by a radial sleeve-type component of the clamping chuck (8).

10. Boring tool device according to claim 9, **characterised in that** the sleeve-type component of the clamping chuck 8 is formed by the tool holder (20).

11. Boring tool device according to one or more of the foregoing claims, **characterised in that** the manually-operable locking and release mechanism (10) comprises contact bodies (12), which can be radially latched or released from outside in a cut-out (14) in the drive spindle (6) in order to mount or release the clamping chuck (8) with axial positive locking on the drive spindle (6).

12. Boring tool device according to one or more of the foregoing claims, **characterised in that** the driving spindle (6) has a continuous opening (48) in the longitudinal direction (22), in which a striking mechanism is provided for the axial striking impulse for a tool clamped in the clamping chuck.

13. Boring tool device according to claim 12, **characterised in that** the striking mechanism comprises a striker and a riveting die, the latter acting directly on an axial face of the tool.

14. Boring tool device according to one or more of the foregoing claims, **characterised in that** the tool holder (20) has radial openings (46) in the area, in which it surrounds a tool in use, for fixing the tool, whereby interfacing bodies can gain access from outside through these radial openings (46) in complementary cut-outs in the tool.

15. Boring tool device according to claim 14, **characterised in that** the radial openings (46) are formed as slots.

## Revendications

1. Outil de perçage (2), en particulier marteau perforateur, comportant un carter (4) et une broche d'entraînement (6) en saillie sur ce dernier, et un mandrin de serrage (8) pouvant être monté sur la broche d'entraînement (6) et être détaché de celle-ci, comportant un mécanisme de blocage et déblocage (10) à commande manuelle, pour monter le mandrin de serrage (8) par emboîtement axial sur la broche d'entraînement (6) et pour le débloquer, et comportant un dispositif d'embrayage (26) pour réaliser un accouplement rotatif entre la broche d'entraînement (6) et un composant du mandrin de serrage (8), ledit dispositif d'embrayage (26) étant conçu sous forme d'embrayage anti-surcharge (42) pour limiter un couple de rotation vers l'arrière généré par à-coups, **caractérisé en ce que** le dispositif d'embrayage (26) comporte un premier et un deuxième disque à crans d'arrêt (28 et 32), qui sont disposés tous deux sur la broche d'entraînement (6) et qui restent sur la broche d'entraînement (6) lorsque le mandrin de serrage (8) est détaché, **en ce que** le premier disque à crans d'arrêt (28) est assemblé de manière immobile en rotation avec la broche d'entraînement (6) et le deuxième disque à crans d'arrêt (32) est disposé de manière rotative et mobile dans la direction axiale sur la broche d'entraînement (6) et, en outre, est disposé de manière immobile en rotation et mobile dans la direction axiale sur le mandrin de serrage (8) et vient en appui contre le premier disque à crans d'arrêt (28) sous l'effet de la précontrainte d'un ressort, de telle sorte que par l'emboîtement des disques à crans d'arrêt (28, 32) l'un dans l'autre, il se forme un accouplement rotatif entre la broche d'entraînement (6) et le mandrin de serrage (8), qui se désolidarise en cas de surcharge.

2. Outil de perçage selon la revendication 1,
**caractérisé en ce que** le deuxième disque à crans d'arrêt (32) est solidaire en rotation avec un porte-outil (20) du mandrin de serrage (8).

3. Outil de perçage selon la revendication 1 ou 2,
**caractérisé en ce que** le deuxième disque à crans d'arrêt (32) est solidaire en rotation avec le mandrin de serrage (8) au moyen d'une denture périphérique ou par un moyen d'accouplement en rotation (40) saillant dans la direction radiale.

4. Outil de perçage selon la revendication 1, 2 ou 3, **caractérisé en ce qu'**un ressort de pression (34) est en appui contre une face frontale avant du deuxième disque à crans d'arrêt (32).

5. Outil de perçage selon la revendication 4,
**caractérisé en ce que** le ressort de pression (34) est fixé avec une extrémité contre la broche d'entraînement (6) et est en appui axial contre cette dernière.

6. Outil de perçage selon la revendication 4 ou 5,
**caractérisé en ce que** le ressort de pression (34) comporte un ensemble de ressorts Belleville (36).

7. Outil de perçage selon une ou plusieurs des revendications précédentes, **caractérisé en ce que** le dispositif d'embrayage (26) est disposé sur un épaulement (30) axial de la broche d'entraînement (6).

8. Outil de perçage selon une ou plusieurs des revendications précédentes, **caractérisé en ce que** le dispositif d'embrayage (26) est disposé en dehors du carter (4).

9. Outil de perçage selon la revendication 8,
**caractérisé en ce que** le dispositif d'embrayage (26) est entouré radialement à l'extérieur par un composant en forme de fourreau du mandrin de serrage (8).

10. Outil de perçage selon la revendication 9,
**caractérisé en ce que** le composant en forme de fourreau du mandrin de serrage (8) est formé par le porte-outil (20).

11. Outil de perçage selon une ou plusieurs des revendications précédentes, **caractérisé en ce que** le mécanisme de blocage et déblocage (10) à commande manuelle, pour le montage ou le déblocage par emboîtement axial sur la broche d'entraînement (6), comporte des corps de prise (12), qui peuvent être engagés radialement de l'extérieur dans un évidement (14) dans la broche d'entraînement (6) et être dégagés hors dudit évidement.

12. Outil de perçage selon une ou plusieurs des revendications précédentes, **caractérisé en ce que** la broche d'entraînement (6) comporte une ouverture (48) traversante dans la direction longitudinale (22), dans laquelle est prévu un outil de percussion destiné à solliciter axialement par impulsions un outil logé dans le mandrin de serrage.

13. Outil de perçage selon la revendication 12,
**caractérisé en ce que** l'outil de percussion comporte un percuteur et une bouterolle, cette dernière agissant directement sur une face frontale axiale de l'outil.

14. Outil de perçage selon une ou plusieurs des revendications précédentes, **caractérisé en ce que** le porte-outil (20), dans la zone dans laquelle il entoure un outil monté, comporte des orifices (46) radiaux pour la fixation de l'outil, des corps de prise passant radialement depuis l'extérieur à travers lesdits orifices (46) radiaux pour s'engager dans des évidements complémentaires de l'outil.

15. Outil de perçage selon la revendication 14,
**caractérisé en ce que** les orifices (46) radiaux sont réalisés en forme de fente.
